Europäisches Patentamt

European Patent Office

Office européen des brevets

(11) Veröffentlichungsnummer: **0 297 293**
**A2**

(12) # EUROPÄISCHE PATENTANMELDUNG

(21) Anmeldenummer: 88108650.8

(22) Anmeldetag: 31.05.88

(51) Int. Cl.⁴: **B29C 47/10 , B29C 47/50 , B29C 67/22**

(30) Priorität: 03.07.87 DE 3722050

(43) Veröffentlichungstag der Anmeldung:
04.01.89 Patentblatt 89/01

(84) Benannte Vertragsstaaten:
**BE DE FR GB IT NL SE**

(71) Anmelder: **HERMANN BERSTORFF
Maschinenbau GmbH
An der Breiten Wiese 3/5
D-3000 Hannover 61(DE)**

(72) Erfinder: **Kolossow, Klaus-Dieter
Waldweg 4
D-3107 Hambühren(DE)**

(54) **Verfahren und Extruderanlage zum Herstellen eines aufschäumbaren Kunststoffgemisches.**

(57) Es wird ein Verfahren und eine Anlage aufgezeigt zum Herstellen eines mit Treibmitteln aufschäumbaren Kunststoffgemisches. Durch das Verfahren wird erreicht, daß stark unterschiedliche Verarbeitungsbedingungen erfordernde Kunststoffe in einem Extruder aufgeschmolzen, homogenisiert und mit einem Treibmittel vermischt werden können. Durch die Einspeisung des hochmolekularen oder hochtemperaturbeständigen Kunststoffes in eine erste Einspeiseöffnung und anschließender Einspeisung des niedrigmolekularen oder niedrigtemperaturbeständigen Kunststoffes in eine zweite Einspeiseöffnung, die an einer Stelle angeordnet ist, die stromabwärts des Extruders liegt, an der der erste Kunststoff in aufgeschmolzenem und homogenem Zustand vorliegt, wird eine hervorragende Homogenisierung beider Kunststoffe und des Treibmittels sichergestellt.

Fig.1

EP 0 297 293 A2

## Verfahren und Extruderanlage zum Herstellen eines aufschäumbaren Kunststoffgemisches

Die Erfindung betrifft ein Verfahren und Extruderanlage zum Herstellen eines aufschäumbaren Kunststoffgemisches gemäß dem Oberbegriff von Patentanspruch 1.

Aus der DE-PS 33 16 838 ist ein Herstellungsverfahren für einen, aus einem Kunststoff bestehenden Kunststoffschaum bekannt. Der Kunststoff wird auf einer Tandem-Extruderanlage aufbereitet, wobei in dem ersten Einschneckenextruder ein Aufschmelzvorgang und ein Mischvorgang mit dem eingedüsten Treibmittel erfolgt. Danach wird das Kunststoff-Treibmittelgemisch in einen zweiten Extruder gefördert, in dem es bis kurz vor dem Reaktionspunkt des Treibmittels heruntergeküht und zu einem Folienschlauch extrudiert wird.

Es ist in zunehmendem Maß von Bedeutung, spezielle Schaumkunststoffe mit außergewöhnlichen Eigenschaften auf dem Markt anbieten zu können. Unter derartigen Kunststoffen werden beispielsweise flammenfeste, hochsäurebeständige, hochdruckfeste, hochtemperaturbeständige und hochzugfeste Kunststoffe verstanden.

Das Herstellen derartiger Schaumkunststoffe auf der Basis der hochwertigen Kunststoffe, setzt voraus, daß die Produkte sich zur Zell- bzw. Schaumbildung eignen. Diese Voraussetzung wird geschaffen durch die Zugabe sich aufgrund ihrer Struktur und Eigenschaften für das Extrusionsverschäumen eignenden Zusatzstoffe.

Es hat sich herausgestellt, daß es äußerst - schwierig ist, einen hochmolekularen oder hochtemperaturbeständigen Kunststoff (Makromolekühle) und einen niedrigmolekularen Kunststoff oder auch einen durch Zusätze schwer entzündbar gemachten Kunststoff oder dergl. mit einem normalen Kunststoff zu vermischen und daraus ein homogenes Produkt zu schaffen.

Auf der anderen Seite besteht ein Bedürfnis, sehr teure Spezialkunststoffe, wie z.B. PPO (Polyphenylenoxid) mit niedrigmolekularen, üblichen Kunststoffen zu verschneiden, um weniger von den sehr teuren Kunststoffen einsetzen zu müssen.

Als zusätzliches Problem tritt die erforderliche, homogene Vermischung des Kunststoffes mit einem Treibmittel auf. Da die Treibmittel, Fluorchlorkohlenwasserstoffe, aliphalischer Kohlenwasserstoffe oder ADC-Azodicarbonamid hinsichtlich ihrer Verarbeitungsbedingungen sich stark von den zu verarbeitenden Kunststoffen unterscheidende Eigenschaften aufweisen und insbesondere nur innerhalb enger Temperatur- und Druckbereiche verarbeitet werden können, ist eine homogene Vermischung sehr schwierig. Inhomogenitäten hinsichtlich des Kunststoff-Treibmittelgemisches verursachen einen ungleichmäßigen Aufschäumvorgang, d.h. es entstehen z.B. unterschiedliche Dikken und Zellgrößen in einer aufgeschäumten Folie bzw. Schwachstellen bei anderen Produkten.

Es ist die Aufgabe der Erfindung, ein Verfahren vorzuschlagen, mittels dem teure und hochmolekulare oder hochtemperaturbeständige, aufgeschäumte Kunststoffe zwecks besserer Verarbeitungsfähigkeit mit herkömmlichen aufgeschäumten Kunststoffen, je nach geforderter Eigenschaften des Endkunststoffes verschnitten werden können.

Weiterhin soll die Treibmittelaufnahmefähigkeit und -verteilung in der Kunststoffmischung verbessert und die Vermischung und Homogenisierung besonderer Kunststoffe in einem Extruder ermöglicht werden, wobei bestimmte Eigenschaften eines Kunststoffes, wie Flammfestigkeit, Druckfestigkeit, Wärmebeständigkeit, durch das Verfahren eingestellt und variiert werden können sollen.

Die Aufgabe wird durch die Merkmale, wie beschrieben in Anspruch 1, gelöst.

Durch die Einspeisung des hochmolekularen und höher temperaturbeständigen Kunststoffes in einen Extruder mit einer regelbaren oder auch konstanten Förderleistung, d.h. mit einem steuerbaren Verweilzeitspektrum, ist eine exakte Einstellung der Temperaturbeaufschlagungszeit des Kunststoffes gegeben, durch eine Variierung der Schneckendrehzahl, die für die Fördermengenleistung verantwortlich ist. In bevorzugter Weise wird ein Zweischneckenextruder eingesetzt, bei dem beide Schnecken Stege aufweisen, die sich mit ihren Rücken fast berühren und gegenseitig abstreichen, so daß der gesamte Ganginhalt fast rückstandslos weitergefördert wird. Durch diese Anordnung kann gezielt auf die Verweilzeit des Material Einfluß genommen werden.

Der Kunststoff, z.B. ein hochmolekularer PPO, wird in die erste Einspeiseöffnung eingegeben und auf einer Extruderlänge bis 10 D aufgeschmolzen.

Dann wird der niedermolekulare Kunststoff, z.B Polystyrol, der weniger Zeit zum Aufschmelzen braucht, in die Kunststoff schmelze eingespeist und aufgeschmolzen. Durch diese Maßnahme wird erreicht, daß der hochmolekulare Kunststoff als Schmelze vorliegt, wenn der niedrigmolekulare Kunststoff in den Extruder eingespeist wird. Der Aufschmelzvorgang des niedrigmolekularen Kunststoffes, der weitaus weniger temperaturbeständig ist, führt somit nicht zu einer thermischen Überbelastungen dieses Kunststoffes und die Homogenisierung beider Kunststoffe als Schmelzen wird erheblich begünstigt.

In diese sehr individuell behandelte Kunststoffschmelze wird dann das Treibmittel eingedüst, wobei wiederum durch die regelbare Förderleistung auf die Vermisch- und Verweilzeit des Treibmittels mit der Kunststoffmischung Einfluß genommen werden kann.

Wenn ein sehr langsam aufschmelzender Kunststoff, z.B. ein SMA (Styrol-Maleinsäure-Anhydrid), dem vorher z.B. ein flammhemmender Bestandteil beigemischt worden ist und der in Granulat- oder Pulverform in die erste Einspeiseöffnung gegeben wird, aufgeschmolzen werden soll, wird die Drehzahl der Schnecke zurückgenommen, wodurch die Verweilzeit bis zur zweiten Einspeiseöffnung verlängert wird.

Dadurch wird auch in diesem Fall sichergestellt, daß an der zweiten Einspeiseöffnung ein aufgeschmolzener Kunststoff vorliegt, wodurch der Aufschmelzvorgang für den zweiten Kunststoff verkürzt wird.

Es kann gezielt auf beide Kunststoffschmelzepunkte und Schmelzindexe eingegangen werden, wodurch der Aufschmelz- und Homogenisiervorgang individuell abgestimmt auf die Eigenschaften der Kunststoffe vorgenommen werden kann. Auf Verarbeitungsbedingungen der sehr teuren Spezialkunststoffe kann besonders eingegangen werden.

Der Einsatz eines chemischen Treibmittels hat den Vorteil einer besseren Umweltverträglichkeit. Voraussetzung ist, daß in dem Einspeisebereich dieses Treibmittels der Extruder drucklos gefahren wird, weil das chemische Treibmittel vorher in ein Kunststoffgranulat oder ein Kunststoffpulver eingearbeitet und dann als Granulat oder als Pulver in den Zweischnekkenextruder eingespeist wird.

Es hat sich als vorteilhaft erwiesen, beim Einsatz eines chemischen Treibmittels eine größere Mischlänge, d.h. eine grössere Schneckenlänge des Doppelschneckenextrudrs etwa ab 4 D, gerechnet ab der Treibmitteleinspeiseöffnung, vorzusehen, um eine bessere Vermischung und Homogenisierung in der Kunststoffschmelze zu erreichen.

Die Eingabe des chemischen Treibmittels erfolgt etwa nach einer Schneckenlänge von 28 D und die Homogenisierung der Schmelze mit dem granulat- oder auch pulverförmigen Treibmittel wird in vorteilhafter Weise in den folgenden 4 - 6 D Schneckenlänge durchgeführt.

Die physikalischen Treibmittel liegen in flüssiger Form vor und werden mit einem, den Druck im Extrusionsraum übersteigenden Druck eingedüst. Für die Vermischung und Homogenisierung wird weniger Schneckenlänge benötigt.

Als eine besonders vorteilhafte Maßnahme hat sich die Einspeisung des Porenbildners zusammen mit dem niedrigmolekularen Kunststoff erwiesen, da eine sehr intensive Vermischung beider Bestandteile innerhalb kürzester Schneckenweglänge mit dem bereits als Schmelze vorliegenden, hochmolekularen oder hochtemperaturbeständigen Kunststoff erfolgt.

Ein bevorzugtes Ausführungsbeispiel einer Anlage für die Durchführung des erfindungsgemäßen Verfahrens wird in den Zeichnungen gezeigt und nachfolgend erläutert.

Es zeigen:

Fig. 1 einen schematisierten Längsschnitt durch eine Tandem-Anlage.

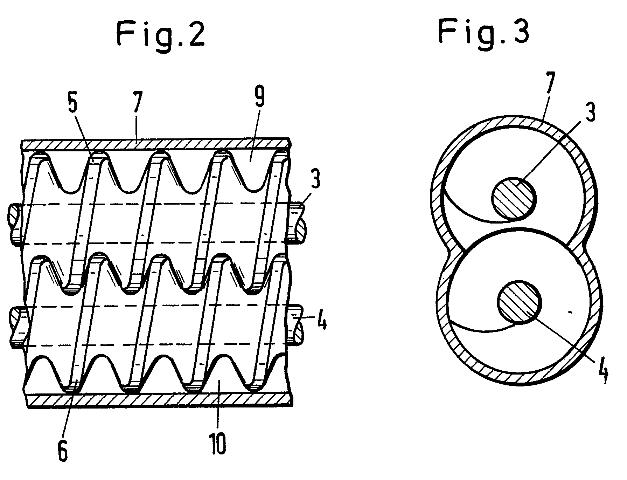

Fig. 2 einen Ausschnitt des Zweischneckenextruders in vergrößerter Form.

Fig. 3 einen Querschnitte gemäß der Linie III-III in Fig. 2.

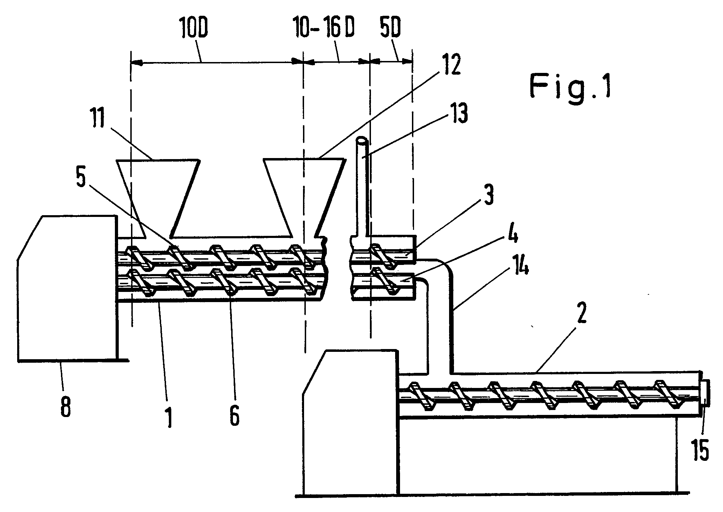

Die in Fig. 1 gezeigte Tandem-Anlage besteht aus dem Homogenisierextruder 1 und dem Kühlextruder 2.

Der Homogenisierextruder ist als Zweischneckenextruder ausgebildet. Schnecken 3 und 4 weisen wendelförmig verlaufende Stege 5 und 6 auf und sind in dem Gehäuse 7 angeordnet. Die Schnecken 3 und 4 werden durch das stufenlos hinsichtlich der Drehzahl verstellbare Getriebe mit Antrieb 8 in Drehbewegung gesetzt, wodurch die ineinandergreifenden Stege 5 und 6 sich gegenseitig abstreichen. Durch einen derartig kämmenden Eingriff beider Stege 5 und 6 wird das in den Schneckengängen 9 und 10 sich befindende Material fast vollständig weitergefördert, so daß ein sehr genaues Verweilzeitspektrum des Kunststoffes in dem Zweischneckenextruder sichergestellt werden kann.

Durch eine Erhöhung oder Reduzierung der Schneckendrehzahl kann somit gezielt eine jeweilige Verweilzeit des Kunststoffes in dem Zweischneckenextruder eingestellt werden.

Dem Zweischneckenextruder sind weiterhin zwei oder drei Einspeiseöffnungen 11 und 12 zugeordnet, wobei der Abstand zwi schen beiden Einspeisetrichtern bis zu 10 D (Schneckendurchmesser) sein kann, um in Verbindung mit einer Steuerung der Schneckendrehzahl und somit der Fördergeschwindigkeit, eine ausreichende Beaufschlagungszeit auf den in Granulatform eingegebenen Kunststoff zur Verfügung zu haben.

Durch die Einspeiseleitung 13 wird in das Kunststoffgemisch ein Treibmittel mit einem Druck eingedüst, der geringfügig über dem Druck in dem Zweischneckenextruder 1 liegt.

Anstelle der Einspeiseleitung 13 kann auch ein Einspeisetrichter vorgesehen werden, wenn ein chemisches Treibmittel als Masterbatch in Pulver- oder Granulatform eingebracht wird.

In einem solchen Fall hat es sich als Vorteil herausgestellt, noch ein etwa 5 D-langes Schneckenteil für eine gute Einmischung des Treibmittels in die Schmelze zur Verfügung zu haben, bevor das Material/Treibmittelgemisch durch die Leitung 14 dem Kühlextruder 2 zugeführt wird, in dem eine Kühlung des Gemisches auf eine Temperatur kurz vor dem Aufschäumpunkt des Treibmittels erfolgt.

Anschließend wird die Kunststoffschmelze durch die schematisiert dargestellte Düse 15 zu einem nicht gezeigten Folienschlauch oder auch zu einem Flachprofil extrudiert, wobei beim Austritt der Schmelze aus der Düse der Aufschäumvorgang erfolgt.

## Ansprüche

1. Verfahren zum Herstellen eines aufschäumbaren Kunststoffgemisches aus zwei unterschiedliche Eigenschaften aufweisenden Kunststoffen auf einer aus zwei Extrudern bestehenden Tandem-Extruder-Anlage, in der das Kunststoffgemisch mit einem Treibmittel in einem ersten Extruder homogenisiert, danach einem zweiten Extruder zugeführt, in diesem gekühlt und zu einem Folienschlauch oder einem Profil extrudiert wird.
**dadurch gekennzeichnet,**
daß in einer ersten Einspeiseöffnung des ersten Extruders ein hochmolekularer oder hochtemperaturbeständiger Kunststoff eingespeist und stromabwärts in dem, eine regelbare Förderleistung durchführenden Extruder aufgeschmolzen wird, daß in einer zweiten Einspeiseöffnung des ersten Extruders in den aufgeschmolzenen, homogenisierten, in der ersten Einspeiseöffnung eingespeisten Kunststoff ein zweiter niedrigmolekularer oder niedrigtemperaturbeständiger Kunststoff zusammen mit einem Porenbildner eingespeist wird, und daß anschließend in das aufgeschmolzene und homogenisierte Kunststoffgemisch stromabwärts im ersten Extruder in einer dritten Einspeiseöffnung ein Treibmittel eingebracht und mit der Mischung homogenisiert wird.

2. Verfahren nach Anspruch 1,
**dadurch gekennzeichnet,**
daß der hochmolekulare oder hochtemperaturbeständige Kunststoff ein PPO (Polyphenyloxid), ein SMA (Styrol-Maleinsäureanhydrid), ein ABS (Acryl-Butadien-Styrol), ein PC (Polycarbonat), ein PVC (Polyvinylchlorid), ein PPS (Polyacrylsulfon) oder ein TPU (thermoplastischer Polyurethan) ist.

3. Verfahren nach Anspruch 1,
**dadurch gekennzeichnet,**
daß der niedrigmolekulare oder niedrigtemperaturbeständige Kunststoff ein PS (Polystyrol) oder ein PVC (Polyvinlchlorid) ist.

4. Verfahren nach Ansoruch 1,
**dadurch gekennzeichnet,**
daß das Treibmittel ein chemisches Treibmittel Azodicarbonamid ist, welches in einen geschmolzenen Kunststoff (Polyolefin oder Wachs) eingearbeitet, granuliert und als Masterbatch-Granulat oder in Pulverform vorliegt.

5. Verfahren nach Anspruch 1,
**dadurch gekennzeichnet,**
daß als Treibmittel ein physikalisches Treibmittel, z.B. ein Fluorchlorwasserstoff, ein aliphatischer Kohlenwasserstoff, ein $Co_2$ oder ein $N_2$ eingesetzt wird.

6. Verfahren nach Anspruch 1,
**dadurch gekennzeichnet,**
daß als Porenbildner ein organischer Porenbildner, wie eine Zitronensäure oder ein Natrimbikarbonat oder ein anorganischer Porenbildner, wie Talkum, eingesetzt wird.

7. Extruderanlage zur Durchführung des Verfahrens nach Anspruch 1,
**dadurch gekennzeichnet,**
daß als erster Extruder der Tandem-Anlage ein Zweischneckenextruder (1) mit einem, eine regelbare oder konstante Förderleistung gewährleistenden, kämmenden Schnecken-Dichtprofil (3, 4, 5, 6, 7) eingesetzt wird,
daß der Zweischneckenextruder (1) eine erste Einspeiseöffnung (11) aufweist,
daß nach etwa 10 D (D = Schneckendurchmesser) Schneckenlänge eine zweite Einspeiseöffnung (12) angeordnet ist,
daß nach etwa 20 D - 25 D Schneckenlänge eine dritte Einspeiseöffnung für ein chemisches Treibmittel angeordnet ist.

Fig.1

# Fig.2

# Fig.3